(19) **Europäisches Patentamt**
**European Patent Office**
**Office européen des brevets**

(11) **EP 2 204 920 B1**

(12) **EUROPEAN PATENT SPECIFICATION**

(45) Date of publication and mention
of the grant of the patent:
**28.12.2011 Bulletin 2011/52**

(51) Int Cl.:
*H04B 3/46* (2006.01)      *H04L 25/02* (2006.01)

(21) Application number: **09305005.2**

(22) Date of filing: **05.01.2009**

(54) **Method and device for reducing crosstalk**

Verfahren und Vorrichtung zur Reduktion von Übersprechungen

Procédé et dispositif pour la réduction de diaphonie

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**07.07.2010 Bulletin 2010/27**

(73) Proprietor: **Alcatel Lucent**
**75008 Paris (FR)**

(72) Inventors:
• **Guenach, Mamoun**
**1830, Machelen (BE)**
• **Maes, Jochen**
**2431, Veerle (BE)**
• **Peeters, Michael**
**1742, Ternat (BE)**

(74) Representative: **ALU Antw Patent Attorneys**
**Intellectual Property and Standards**
**Copernicuslaan 50**
**2018 Antwerp (BE)**

(56) References cited:
**WO-A-2008/123977**

• **WHITING P ET AL: "DSL Crosstalk Coefficient Acquisition Using SNR Feedback" GLOBAL TELECOMMUNICATIONS CONFERENCE, 2008. IEEE GLOBECOM 2008. IEEE, IEEE, PISCATAWAY, NJ, USA, 30 November 2008 (2008-11-30), pages 1-5, XP031370341 ISBN: 978-1-4244-2324-8**
• **WHITING P ET AL: "Performance results for digital subscriber line precoders" BELL LABS TECHNICAL JOURNAL, WILEY, CA, US, vol. 1, no. 13, 21 March 2008 (2008-03-21), pages 147-161, XP001512252 ISSN: 1089-7089**

**Description**

**Field of the Invention**

The present invention generally relates to the field of multi-channel communication technology and more in particular to a method and device for dealing with the problem of crosstalk between channels of a multi-channel communication system.

**Background of the Invention**

A variety of communication systems use multiple channels to increase data rates and/or to separate different data streams being communicated. Examples of such systems include some wireless communication systems, digital subscriber line (DSL) systems and dense wavelength division multiplexed (DWDM) systems. In such systems the various channels share a portion of a physical communication link so that inter-channel crosstalk can occur between the channels. For example, a DSL system transmits the DSL tones for each channel over the same twisted copper wire pair. For that reason a transmission on one DSL tone may be detected at a DSL receiver in the frequency channel of one or more other DSL tones. Generally, the presence of inter-channel crosstalk implies that a communication transmitted to one receiver may, to some extent, be received on one or more other receivers.

Many multi-channel communication systems can be described by the linear crosstalk model. The linear crosstalk model defines the relationship between the transmitted and received symbols in a communication time slot by the relation:

$$\mathbf{Y} = \mathbf{H} \cdot \mathbf{X} + \mathbf{Z}. \qquad\qquad (\text{eq. 1})$$

In eq.1 the N-component complex vectors $\mathbf{X}$, $\mathbf{Y}$, and $\mathbf{Z}$ represent the transmitted symbol or signal, the received symbol or signal, and the noise, respectively, while N denotes the number of channels of the system, for example the number of active DSL loops. In particular, the k-th components $X_k$, $Y_k$, and $Z_k$ of these vectors are the transmitted signal, the received signal and the noise signal on the k-th channel, respectively. The NxN complex matrix $\mathbf{H}$ is referred to as the channel matrix. The (k,m)-th component $H_{k,m}$ describes how the physical communication link produces a signal on the k-th channel in response to a symbol being transmitted to the m-th channel. The diagonal elements of the channel matrix $\mathbf{H}$ describe direct channel couplings and the off-diagonal elements of the channel matrix describe inter-channel couplings.

Inter-channel crosstalk can reduce considerably the achievable data rates. Knowledge of the channel matrix $\mathbf{H}$ can be exploited to reduce such undesired crosstalk. Crosstalk channel estimation is a challenging problem. Various solutions have been proposed to determine off-diagonal elements of the channel matrix of a multi-channel communication system. Often they rely on signal-to-interference-plus-noise ratios (SINR) measured at a receiver. The measured values can subsequently be used to estimate one or more off-diagonal elements of the channel matrix. A SINR may also be averaged over a number of neighbouring frequency bands (as long as the SINR value is indicative of the SINR in the individual channels). The estimates of the off-diagonal elements of the channel matrix, or more precisely of the off-diagonal elements normalized with the diagonal elements (i.e. $H_{k,m}/H_{k,k}$ with k#m) can subsequently be used to pre-compensate (typically by precoding) or to post-compensate the crosstalk produced by the physical communication link. With precoding, signals are passed through an artificial precoding channel before being transmitted over the respective transmission channels. The precoding channel is such that the cascade of precoder and transmission channel results in a (substantially) reduced interference level at the receiver.

Patent applications WO2008/123977 and US11/897,809 both disclose a method for determining the channel matrix $\mathbf{H}$ of a physical communication link in a multi-channel communication system. Patent application US11/897,809 claims the priority date of 31.08.2007 and it has been published on 12.03.2009 with the number WO2009/032093. This document is thus a state of the art according to article 54(3) EPC. In WO2008/123977 the SINR of single channels measured at the receiver enables the determination of the relative phase(s) of the off-diagonal elements. WO2008/123977 also discloses an embodiment wherein a transmitter includes a precoder configured to diagonalize the physical communication link based on magnitudes and relative phases of the off-diagonal elements of the channel matrix. In US11/897,809 a method is proposed wherein the SNIR are measured in the presence of temporally correlated data signal streams on different channels of the communication system. More in particular, a first signal stream is transmitted to a first channel of a multi-channel communications medium while a second signal stream is transmitted to a different second channel of the medium. The second signal stream is substantially temporally correlated to the first signal stream. An SINR is received at the transmitter, said SINR being measured at a receiver configured to receive signals from the first channel. The SINR is measured while the receiver receives the first signal stream. An off-diagonal element can then be determined of a channel matrix between the first and second channels or a ratio of said off-diagonal element to a diagonal element of the channel matrix. The step of determining is based on the received SINR. Phase and amplitude of the off-diagonal element of the channel matrix between the first and second channels can be estimated. This information can subsequently be used to reduce the undesired crosstalk via precompensation in a precoder.

Typically one shot to estimate the crosstalk channels from one disturber line towards all the active lines requires three SNR measurements that have to be reported by each of the active lines in parallel. An example of three such measurements is the following. A first signal-to-interference-plus-noise ratio is measured in the presence of correlated crosstalk and yields as result $SINR_{CXT}$. Another SINR is measured by the same receiver in a period of time that no signal is transmitted on the disturber channel. This measurement is referred to as $SINR_{NXT}$, where the subscript NXT means no crosstalk, as this SINR is measured in the absence of crosstalk. A third SINR measured by the same receiver is the one measured while substantially temporally uncorrelated signal streams are transmitted. The result is denoted $SINR_{UXT}$, where UXT means uncorrelated crosstalk, because the SINR is determined in the presence of temporally uncorrelated crosstalk. One so obtains three measured values, namely $SINR_{CXT}$, $SINR_{NXT}$ and $SINR_{UXT}$. Another example is to use two SNR measurements with two distinct correlations $SINR_{CXT1}$ and $SINR_{CXT2}$ and one measurement with uncorrelated crosstalk $SINR_{UXT}$.

It turns out that one SNR is reported by the customer premises equipment (CPE) in up to 11 s. Therefore the proposed method suffers from a very slow convergence speed to the steady state both in a full start-up with high number of active lines and for the joining event. Hence a solution is required to speed up the convergence in such scenarios, i.e. full start-up and joining event and to track the fast variations of the channels as well.

## Aims of the invention

The present invention aims to provide a method and device for reducing cross-channel interference in a multi-channel communication system with an improved convergence speed as compared to the prior art solutions.

## Summary

The present invention relates to a method for reducing crosstalk caused by a disturber channel on a victim channel in a multi-channel communication system. The method comprises the step of obtaining an estimate of the crosstalk caused by the disturber channel on the victim channel. This is preferably done by determining at a receiver of the communication system a signal-to-interference-plus noise ratio on the victim channel. Alternatively, the estimation may be based on information stored in the management information base. The method is characterised in that it comprises the further step of transmitting from at least one transmitter to a receiver of the communication system a perturbation signal containing phase information derived from the estimate, whereby said receiver is arranged for receiving data sent over the victim channel.

This approach allows achieving the above-mentioned aim of the invention, as in the process of crosstalk channel estimation it is found that the initial estimates have a relatively better phase accuracy than amplitude accuracy. This observation is exploited by applying a perturbation signal that contains phase information from the estimate, such that a faster convergence of the crosstalk channel estimates is obtained.

In a preferred embodiment the perturbation signal is transmitted over the victim channel. Alternatively it can be transmitted over the disturber channel.

Advantageously the method comprises the step of assessing whether the transmitted perturbation signal contributes in reducing the crosstalk. This additional step gives an indication whether or not there is indeed a reduction of the crosstalk, i.e. whether one is cancelling in the 'right' direction.

The estimate of the crosstalk is preferably obtained by determining at the receiver of the communication system a signal-to-interference-plus-noise ratio on the victim channel, while transmitting a first signal stream on the disturber channel and a second signal stream on the victim channel, said receiver being configured for at least receiving the second signal stream.

In a preferred embodiment the method comprises the further step of precoding at least the second signal stream on the victim channel based on information derived from the estimate and transmitting the precoded second signal stream on the victim channel. Optionally, also the first signal stream can be precoded and subsequently transmitted over the disturber channel. If the perturbation signal does contribute in reducing the crosstalk, the perturbation signal is used to adapt the precoding operation. In the opposite case, if the perturbation signal does not contribute in reducing the crosstalk, at least one additional signal-to-interference-plus-noise measurement is performed.

In an advantageous embodiment the perturbation signal has a phase substantially opposite to the phase of the estimate.

Typically the method steps are performed iteratively, until a good enough estimation is obtained.

In yet another embodiment the crosstalk is caused by a plurality of disturber channels. An estimate is then obtained of the crosstalk caused by each of the disturber channels. Phase information derived from the estimates is used to construct the perturbation signal.

In another aspect the invention relates to a device for use in the method as described above. The device comprises means for receiving an estimate of the crosstalk caused by a disturber channel on a victim channel in a multi-channel communication system and a transmitter arranged for transmitting a perturbation signal containing phase information derived from that estimate. Preferably the device further comprises means for precoding a data stream to be transmitted.

## Brief Description of the Drawings

Fig. 1 illustrates a block diagram illustrating a multi-channel communication system that uses measurements of signal-to-interference-plus noise ratios to estimate off-diagonal element(s) of the channel matrix therein.

Fig. 2 illustrates a block diagram illustrating a digital subscriber line (DSL) communication system as a specific case of the system in Fig.1.

Fig. 3 illustrates a block diagram illustrating a part of a DSL communication system that supports DSL communications to a single DSL subscriber in a specific embodiment of the system of Fig.1.

Fig. 4 illustrates a wavelength-division-multiplexed (WDM) optical communication system as another specific case of the system of Fig.1.

Fig. 5 illustrates a block diagram illustrating a wireless communication system with a multiple-antenna transmitter as a specific case of the system of Fig.1.

Fig. 6 illustrates a block diagram illustrating a wireless communication system with a multiple-antenna transmitter as another specific case of the system of Fig.1.

## Detailed Description of Embodiment(s)

In the method according to the present invention perturbation signals are used not only to estimate the crosstalk channels, but also to already cancel the crosstalk channels. This can be done by exploiting the phase information present in a previously obtained estimate of the crosstalk caused by a disturber channel on the considered victim channel. The invention capitalizes on the observation that, when estimating a crosstalk channel while convergence has not been reached yet, the phase of the estimated crosstalk channel is already accurate enough well before a reasonably accurate crosstalk channel amplitude is obtained. Hence, it can readily be assumed that the initial estimates already have a relatively accurate phase. This allows constructing an auxiliary signal capable of cancelling crosstalk while trying to estimate the crosstalk channels. In the auxiliary signal phase information from a previous estimate of the crosstalk channel is applied. Actually there is a trade-off between using the auxiliary signals for either cancellation or estimation of the crosstalk.

Phase information may refer to a phase angle or a phase factor. Also, herein, an estimate of a phase itself and an estimate of a trigonometric function of the phase angle are both estimates of the phase angle. For example, evaluating the real and imaginary parts of a complex number provides an estimate of a phase of the complex number. Also, herein, a phase may refer to a relative phase or an absolute phase.

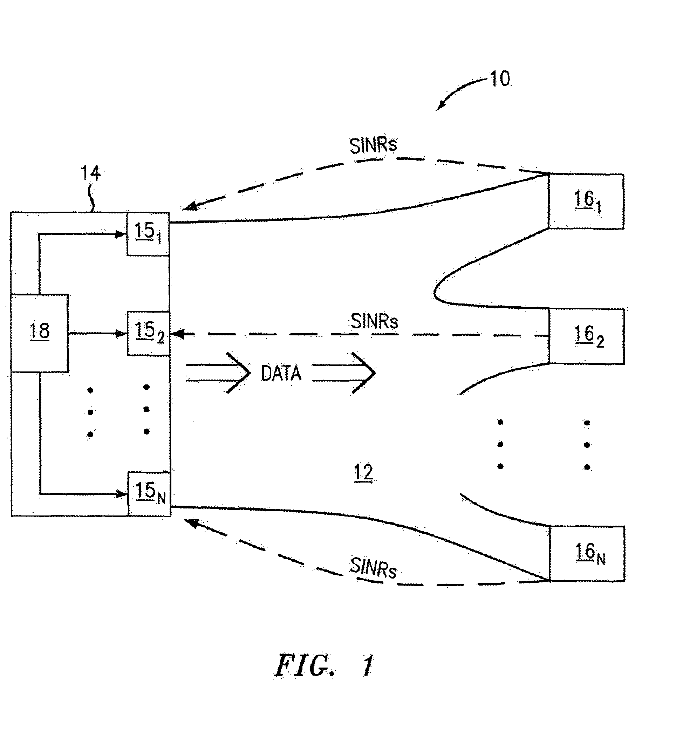

Fig.1 shows a multi-channel communication system 10 that includes a physical communications medium 12, a multi-channel transmitter 14, and N single-channel receivers $16_1$, $16_2$, ..., $16_N$. The physical communications medium 12 supports direct point-to-point communications channels between the transmitter 14 and the N receivers $16_1$, ..., $16_N$. Each communication channel supports the forward transport of signal streams from a corresponding transmitting device $15_1$, $15_2$, ..., $15_N$ of the transmitter 14 to a corresponding one of the receivers $16_1$, $16_2$, ..., $16_N$. For that reason, the transmitter 14 can send independent signal streams to each of the receivers $16_1$, ..., $16_N$ via the N point-to-point channels of the physical communications medium 12. In some embodiments, the point-to-point channels also support communications in the reverse direction from the receivers $16_1$, ..., $16_N$ to the corresponding transmitting devices $15_1$, ..., $15_N$, e.g., at the same or different data rates than those for forward communications.

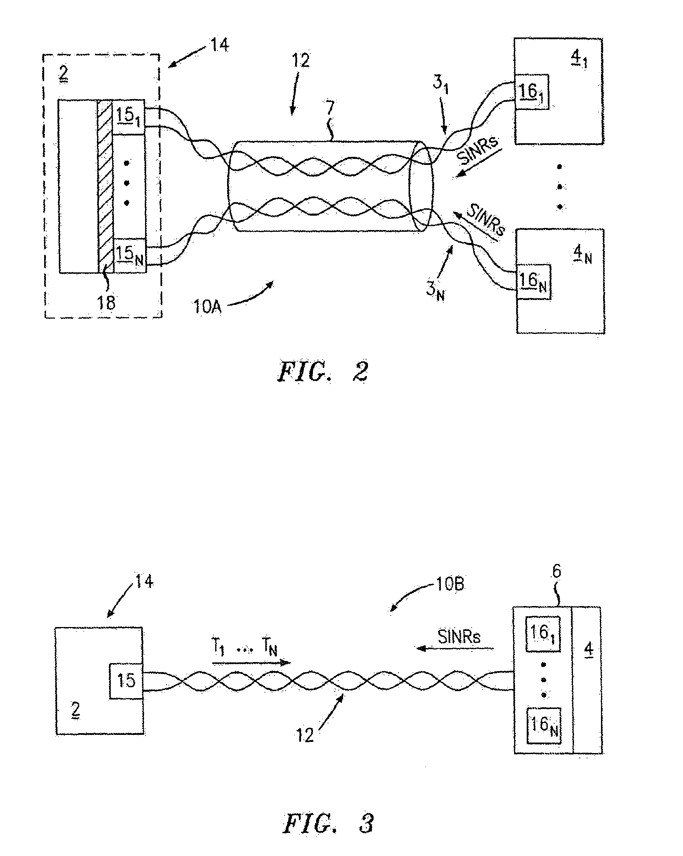

The multi-channel communication system 10 of Fig.1 may have a large variety of specific implementations as illustrated, e.g., by systems 10A, 10b, 10C, 10D in Figs. 2 to 6.

Fig.2 shows part of a digital subscriber line (DSL) communication system 10A that includes an access multiplexer 2, local subscriber communication loops $3_1$, ..., $3_N$, and DSL subscriber premises equipment $4_1$, ..., $4_N$. The access multiplexer 2 and its set of DSL modems $15_1$, ..., $15_N$ function of the transmitter 14 of Fig.1. The collection of local subscriber communication loops $3_1$, ..., $3_N$ functions as the multi-channel communications medium 12 of Fig.1. The DSL subscriber premises equipment $4_1$, ..., $4_N$ and corresponding DSL modems $16_1$, ..., $16_N$ function as the receivers $16_1$, ..., $16_N$ of Fig.1. Each local subscriber communication loop $3_1$, ..., $3_N$ forms a direct channel between a corresponding one of the DSL modems $15_1$, ..., $15_N$ of the access multiplexer 2 and a corresponding one of the DSL modems $16_1$, ..., $16_N$ of the DSL subscriber premises equipment $4_1$, ..., $4_N$.

In Fig.2, some of the local communication loops $3_1$, ..., $3_N$ may have crosstalk there between, e.g., because their twisted copper wire pairs share one or more common binders or cables 7. In the one or more binders or cables 7, the physical nearness of the twisted copper wire pairs of different ones of the local communication loops $3_1$, ..., $3_N$ can cause crosstalk and thus produce non-zero off-diagonal elements in the channel matrix, **H**.

In Fig.2, the DSL modems $16_1$, ..., $16_N$ of the DSL subscriber premises equipment $4_1$,..., $4_N$ are configured to measure signal-to-interference-plus-noise ratios (SINRs) of single DSL tones or to measure averages of SINRs over a small number of nearby DSL tones, e.g., averages over 4 to 8 DSL tones. The DSL modems $16_1$, ..., $16_N$ measure said SINRs at initialization of DSL sessions and/or during the DSL communications themselves, e.g., to track the evolution of the channel matrix **H**. The DSL modems $16_1$, .... $16_N$ of the DSL subscriber premises equipment $4_1$, ..., $4_N$ transmit measured values of the SINRs back to the DSL modems $15_1$, ..., $15_N$ of the access multiplexer 2, e.g., via the local communication loops $3_1$, ..., $3_N$.

Fig.3 illustrates a part of a DSL communication system 10B that supports data communications between an access multiplexer 2 and a single DSL subscriber 4 over N separate DSL tones $T_1$, ..., $T_N$. The DSL communication system 10B includes a DSL modem 15 in the access multiplexer 2, a local subscriber communications loop 3, and a DSL modem 6 in the DSL subscriber premises equipment 4. The DSL modem 6 includes a demodulator circuit $16_1$,..., $16_N$ for each of the DSL tones $T_1$,... , $T_N$. The access multiplexer 2 and its DSL modem 15 function as the transmitter 14 of Fig.1. The local loop 3, e.g., a twisted pair of copper wires, functions as the physical communications medium 12 of Fig.1. Each frequency band of one of the DSL tones $T_1$, ..., $T_N$ functions as one of the channels of Fig.1. Each demodulator circuit $16_1$,..., $16_N$ of the DSL subscriber premises equipment 4 functions as one of the receivers $16_1$, ..., $16_N$ of Fig.1.

In the DSL communication system 10B, the DSL tones $T_1$, ..., $T_N$ are closely spaced in frequency. For that reason, crosstalk occurs between the frequency bands of different ones of the DSL tones $T_1$, ..., $T_N$. The modem 6 of the DSL subscriber 4 measures SINRs on the frequency bands of the individual DSL tones $T_1$, ..., $T_N$ or averages of SINRs over small groups of neighboring ones of the DSL tones $T_1$, ..., $T_N$. The modem 6 may perform these SINR measurements at initialization of a DSL session and/or during DSL data communications, e.g., to track changes to the channel matrix, **H**. The DSL modem 6 of the DSL subscriber 4 transmits the values obtained by such SINR measurements to the DSL modem 5 of the access multiplexer 2, e.g., via the same local subscriber communication loop 3.

Referring again to Fig.2, some embodiments of the communication system 10A use multiple DSL tones $T_1$, ..., $T_M$ to transmit data between corresponding pairs of DSL modems $15_1$, ..., $15_N$ and DSL modems $16_1$, ..., $16_N$. In such embodiments, each frequency range of one DSL tone Ti, ..., $T_M$ of one local communication loop $3_1$, ..., $3_N$ may define a single channel of the physical communication medium 10 in Fig.1. In such embodiments, inter-channel crosstalk can differently affect the various DSL tones of the different local communication loops $3_1$, ..., $3_N$. Thus, in such embodiments the columns and rows of the channel matrix, H, may be indexed by both the identities of DSL tones $T_1$, .., $T_M$ (or small disjoint groups thereof) and the identities of the local communication loops $3_1$, ..., $3_N$. In such embodiments, each DSL modem $16_1$, ..., $16_N$ may measure a separate SINR for the frequency band of one DSL tone $T_1$, ..., $T_M$ or may measure an SINR averaged over a small number of close frequency bands of such DSL tones $T_1$ ..., $T_M$.

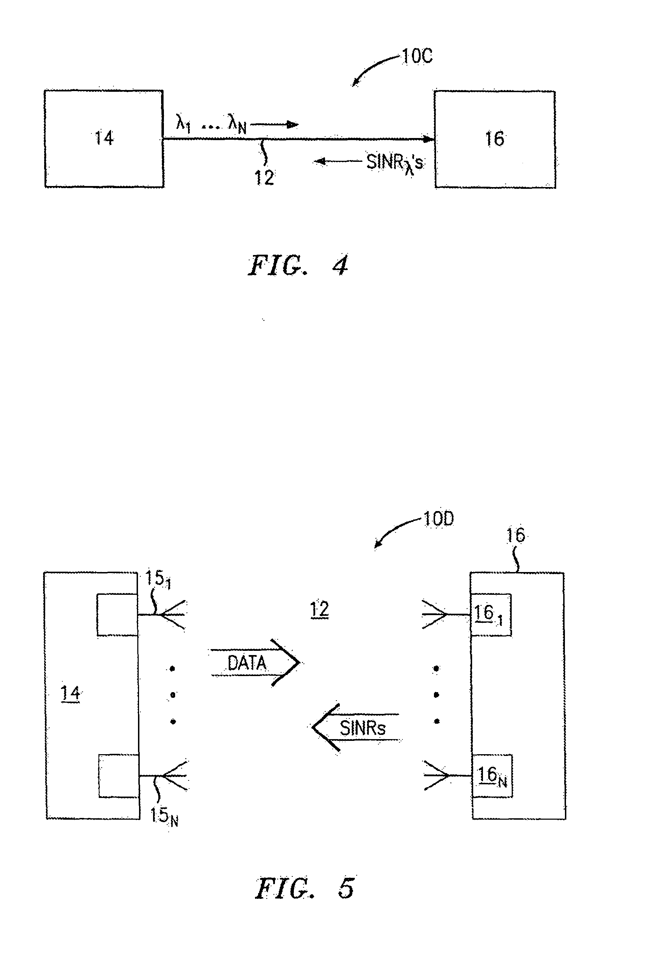

Fig.4 illustrates a wavelength-division-multiplexed (WDM) optical fibre communication system 10C that includes a fibre optical transmission line 12, a multi-wavelength optical transmitter 14, and a multi-wavelength optical receiver 16. The fibre optical transmission line 12 functions as the physical communication medium 12 of Fig.1 by supporting transmissions of optical data signals on a set of wavelength channels $\lambda_1$, ..., $\lambda_N$. The wavelength channels $\lambda_1$, ..., $\lambda_N$ are closely spaced thereby causing optical crosstalk there between. The optical receiver 16 measures SINRs for each wavelength channel $\lambda_1$, ..., $\lambda_N$, i.e., $SINR_\lambda$'s, at session initializations and/or during the transmission of optical communications, i.e., to track changes to the channel matrix, **H**. The optical receiver 16 transmits the measured $SINR_\lambda$'s to the optical transmitter 14, e.g., via the fibre optical transmission line 12 itself.

Fig.5 illustrates a portion of a multiple-antennae wireless communication system 10D that includes a wireless transmitter 14 with a plurality of separate wireless transmission devices $15_1$, ..., $15_N$, a wireless receiver 16 with a plurality of separate wireless receiving devices $16_1$, ..., $16_N$, and a free space region 12. The free space region 12 couples the wireless transmission devises $15_1$, ..., $15_N$ of the transmitter 14 to the wireless receiving devices $16_1$, ..., $16_N$ of the receiver 16. Thus, the free space region 12 serves as the physical communication medium 10 of Fig.1. Each wireless receiving device $16_1$, ..., $16_N$ is configured to measure its own SINR at initialization of a data communication session and/or while carrying out such data communications. The wireless receiver 16 is configured to transmit the measured values of the SINRs back to the wireless transmitter 14, e.g., via the free space communications medium 12.

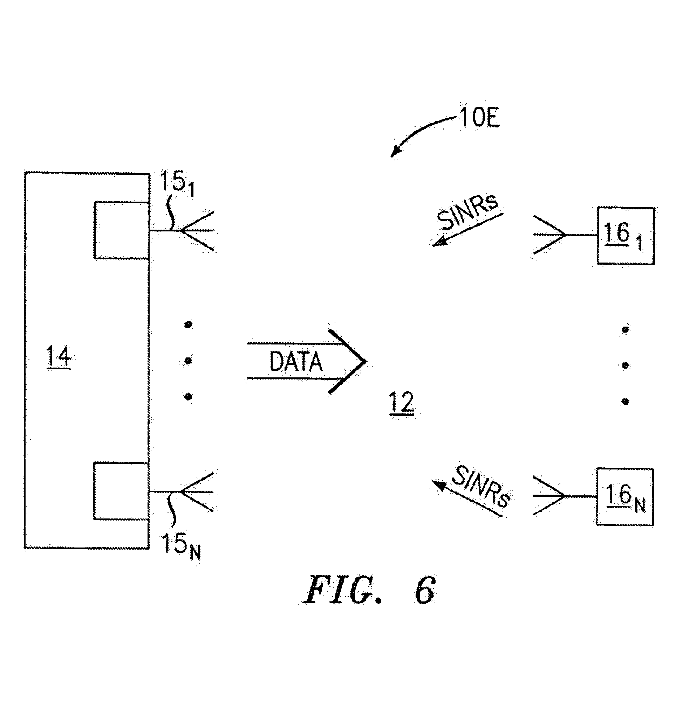

Fig.6 illustrates another embodiment of a multiple-antennae wireless communication system 10E. The system 10E includes a wireless transmitter 14 with wireless transmission devices $15_1$, ..., $15_N$, a plurality of independent wireless receiving devices $16_1$, ..., $16_N$, and a free space region 12. The free space region 12 couples the wireless transmission devises $15_1$, ..., $15_N$ of the transmitter 14 to the wireless receiving devices $16_1$,..., $16_N$ of the receiver 16. Thus, the free space region 12 operates as the physical communication medium 10 of Fig.1. Each wireless receiving device $16_1$, ..., $16_N$ is configured to measure its SINR regularly and to send each measured value of its SINR back to the wireless transmitter 14 without substantial delay.

Now that various examples of multi-channel communication systems have been presented wherein the method of the invention can be applied, more details are provided on the method for reducing crosstalk itself.

In the following the invention is further illustrated in a DSL context. In order not to complicate needlessly the explanations, it is assumed the channel matrix is not changing. However, this is no way limits the scope of the invention. To the skilled person it will be apparent how to modify the derivations below in case the channel matrix is not constant. One aims at refining the residual crosstalk that remains after a previous crosstalk channel estimation. When a scaled version of the signal sent on Kth disturber line (DL$_K$) is added to the VL with index $\ell$, the SINR reported at time $t$ by this victim line VL reads

$$SINR_{l,E[t]} = \frac{1}{\frac{\sigma_K^2}{\sigma_l^2}\left|\Delta_{l,K}[t] + E_{l,K}[t]\right|^2 + \chi_l^2} \qquad \text{(Eq.1)}$$

where $\sigma_l^2$ and $\sigma_K^2$ are the transmit powers of the VL and DL, respectively. They are assumed to be equal to one for simplicity. $E_{l,K}[t]$ is the scaling of the perturbation signal from the DL added on the VL. $\chi_l^2$ represents the noise variance composed of the normalized background noise and the residual crosstalk from the other disturber lines different from DL$_K$. $\Delta_{l,K}[t]$ denotes the residual normalized crosstalk from DL$_K$. Again, as already explained before, three SINR measurements are used. SINR$_{l,0}$ denotes the signal-to-interference-plus-noise ratio in the absence of any perturbation signal. The other two SINR values are obtained via perturbation signals. More explicitly, assuming that arg$\{\hat{\Delta}_{l,K}[t$-1$]\}\approx$arg$\{\Delta_{l,K}[t$-1$]\}$, i.e. the phase of the estimated residual crosstalk at time instant $t$-1 is already a good approximation of the actual residual crosstalk phase, and using the following two perturbation signals

$$E_{l,K}[t] = -\frac{\varepsilon}{\sqrt{SINR_{l,0}}} \exp^{j\left(\arg\{\hat{\Delta}_{l,K}[t-1]\}+\theta_{l,K}\right)} \qquad \text{(Eq. 2)}$$

and

$$E'_{l,K}[t] = -\frac{\varepsilon}{\sqrt{SINR_{l,0}}} \exp^{j\left(\arg\{\hat{\Delta}_{l,K}[t-1]\}+\theta'_{l,K}\right)} \qquad \text{(Eq. 3)}$$

the SINR is increased provided that the scaling factor $\varepsilon$ and the phases $\theta_{l,K}$ and $\theta'_{l,K}$ are properly selected. This of course only happens when one first converges to the phase of the residual crosstalk channel $\Delta_{l,K}[t$-1$]$ and if the amplitude of the estimated residual crosstalk, i. e. $\left|\hat{\Delta}_{l,K}[t-1]\right|$, is smaller than $|\Delta_{l,K}[t$ - 1$]|$. Therefore, adding this a priori phase information in the perturbation signals $E_{l,K}[t]$ and $E'_{l,K}[t]$ results in improved SINRs denoted $SINR_{l,E[t]}$ and $SINR_{l,E'l,k[t]}$, respectively. Further the $2\times2$ matrix M$l,K[t]$ is defined wherein the perturbation signals $E_{l,K}[t]$ and $E'_{l,k[t]}$ are arranged as

$$M_{l,K}[t] = \begin{bmatrix} \Re\{E_{l,K}[t]\} & \Im\{E_{l,K}[t]\} \\ \Re\{E'_{l,K}[t]\} & \Im\{E'_{l,K}[t]\} \end{bmatrix}^{-1}$$

whereby R and / denote the real and imaginary part, respectively. The real and imaginary parts of the estimated residual crosstalk channel $\Delta_{l,K}[t]$ can be easily derived from the three SINRs as:

$$\begin{bmatrix} \Re\{\Delta_{l,K}[t]\} \\ \Im\{\Delta_{l,K}[t]\} \end{bmatrix} = \frac{1}{2} M_{l,K}[t] \begin{bmatrix} \dfrac{1}{SINR_{l,E[t]}} - \dfrac{1}{SINR_{l,0}} - \left|E_{l,K}[t]\right|^2 \\ \dfrac{1}{SINR_{l,E'[t]}} - \dfrac{1}{SINR_{l,0}} - \left|E'_{l,K}[t]\right|^2 \end{bmatrix}^{-1} . \text{ (Eq.4)}$$

Of course the matrix $M_{l,K}$ needs to be invertible and the perturbation signals should be selected such that

$$\Re\{E_{l,K}[t]\}\Im\{E'_{l,K}[t]\} - \Re\{E'_{l,K}[t]\}\Im\{E_{l,K}[t]\} \neq 0.$$

As in the prior art crosstalk channel estimates can be used for precoding purposes. Precoding with these estimates therefore result in a residual crosstalk error vector that highly likely has the same phase as the estimate. Perturbing (using an equivalent term, also named 'probing' in the literature) with a vector with opposite phase then leads (with high probability) to a reduction in the residual crosstalk on top of that achieved by the precoder.

The perturbation signal should be selected such that the newly determined $SINR_{l,E}$ is higher than the initial $SINR_{l,0}$. If such an improvement is indeed observed, then one can be sure to be cancelling in the right direction and therefore the precoder is updated accordingly without waiting for an extra SINR measurements ($SINR_{l,E}$) to acquire the crosstalk channel as described above. Ultimately one updates the precoder based on the most recent estimate of the crosstalk channel after each SINR measurement. In other words $SINR_{l,E}$ becomes $SINR_{l,0}$ and so forth. Ideally the convergence speed using this technique speeds up the convergence of the method as in US11/897,809 by a factor of up to 3 which is of course useful for the full startup and joining scenarios and to track fast channel variations as well.

Alternatively, if it is noticed that

$$SINR_{l,0} > SINR_{l,E}$$

then one extra measurement $SINR_E$ needs to be performed and an estimate of the crosstalk channel can be based on $SINR_{l,O}$, $SINR_{l,E}$ and $SINR_{l,E}$, as proposed in US11/897,809 or described above. Note that the update formulas in US11/897,809 depend on the perturbation signals selected such that $E=\varepsilon$, $E'=j\varepsilon$. However when perturbing with general complex numbers E and E', the update formulas are different (see Eq.4).

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**Claims**

1.  Method for reducing crosstalk caused by a disturber channel on a victim channel in a multi-channel communication system, said method comprising the step of

    - receiving at a first time a first signal-to-interference-plus-noise-ratio observed on said victim channel,
    - obtaining an estimate of said crosstalk caused by said disturber channel on said victim channel,
    - transmitting from at least one transmitter to a receiver of said communication system, said receiver being arranged for receiving data sent over said victim channel, a perturbation signal and
    - obtaining at a subsequent time a second signal-to-interference-plus-noise-ratio observed on said victim channel,

    **characterised in that** said perturbation signal is based on the phase of said estimate of said crosstalk, a properly selected phase θ and said first signal-to-interference-plus-noise-ratio.

2.  Method for reducing crosstalk as in claim 1, wherein said perturbation signal is transmitted over said victim channel.

3.  Method for reducing crosstalk as in claim 1 or 2, wherein a step is performed of assessing whether said transmitted perturbation signal contributes in reducing said crosstalk.

4.  Method for reducing crosstalk as in claim 1, 2 or 3, wherein said estimate of said crosstalk is obtained by determining at said receiver of said communication system a signal-to-interference-plus noise ratio on said victim channel, while transmitting a first signal stream on said disturber channel and a second signal stream on said victim channel, said receiver being configured for at least receiving said second signal stream.

5.  Method for reducing crosstalk as in claim 4, further comprising a step of precoding at least said second signal stream based on information derived from said estimate and transmitting said precoded second signal stream on said victim channel.

6.  Method for reducing crosstalk as in claim 5, wherein, if said perturbation signal does contribute in reducing said crosstalk, said perturbation signal is used to adapt said precoding operation.

7.  Method for reducing crosstalk as in claim 5, wherein, if said perturbation signal does not contribute in reducing said crosstalk, at least one additional signal-to-interference-plus-noise measurement is performed.

8.  Method for reducing crosstalk as in any of claims 1 to 7, wherein said perturbation signal has a phase substantially opposite to the phase of said estimate.

9.  Method for reducing crosstalk as in any of the previous claims, wherein the method steps are performed iteratively.

10. Method for reducing crosstalk as in any of the previous claims, wherein the crosstalk is caused by a plurality of disturber channels and wherein an estimate is obtained of the crosstalk caused by each of the disturber channels.

11. Device for use in a method as in any of claims 1 to 10, comprising means for receiving an estimate of the crosstalk caused by a disturber channel on a victim channel in a multi-channel communication system, means for receiving a signal-to-interference-plus-noise-ratio observed on said victim channel, and a transmitter arranged for transmitting a perturbation signal based on the phase of said estimate of said crosstalk, a properly selected phase θ and said signal-to-interference-plus-noise-ratio.

12. Device as in claim 11, further comprising means for storing said received crosstalk estimates.

13. Device as in claim 11 or 12, further comprising precoding means.

**Patentansprüche**

1.  Verfahren zur Reduktion des Übersprechens, welches von einem Störkanal auf einem Opferkanal in einem Mehrkanal-Kommunikationssystem verursacht wird, wobei das besagte Verfahren die folgenden Schritte umfasst:

- Empfangen, zu einem ersten Zeitpunkt, eines auf dem besagten Opferkanal festgestellten ersten Signal-zu-Interferenz-plus-Rausch-Verhältnisses,
- Erhalten einer Schätzung des besagten von dem besagten Störkanal auf dem besagten Opferkanal verursachten Übersprechens,
- Übertragen eines Störsignals von mindestens einem Sender an einen Empfänger des besagten Kommunikationssystems, wobei der besagte Empfänger für den Empfang von über den besagten Opferkanal gesendeten Daten ausgelegt ist, und
- Erhalten, zu einem darauffolgenden Zeitpunkt, eines auf dem besagten Opferkanal festgestellten zweiten Signal-zu-Interferenz-plus-Rausch-Verhältnisses,

**dadurch gekennzeichnet, dass** das besagte Störsignal auf der Phase der besagten Schätzung des besagten Übersprechens, auf einer korrekt ausgewählten Phase e und auf dem besagten ersten Signal-zu-Interferenz-plus-Rausch-Verhältnis basiert.

2. Verfahren zur Reduktion des Übersprechens nach Anspruch 1, wobei das besagte Störsignal über den besagten Opferkanal übertragen wird.

3. Verfahren zur Reduktion des Übersprechens nach Anspruch 1 oder 2, wobei ein Schritt des Beurteilens, ob das besagte übertragene Störsignal zur Reduktion des besagten Übersprechens beiträgt, durchgeführt wird.

4. Verfahren zur Reduktion des Übersprechens nach Anspruch 1, 2 oder 3, wobei die besagte Schätzung des besagten Übersprechens durch das Bestimmen, an dem besagten Empfänger des besagten Kommunikationssystems, eines Signal-zu-Interferenz-plus-Rausch-Verhältnisses auf dem besagten Opferkanal während der Übertragung eines ersten Signalstroms auf dem besagten Störkanal und eines zweiten Signalstroms auf dem besagten Opferkanal erhalten wird, wobei der besagte Empfänger zumindest für den Empfang des besagten zweiten Signalstroms ausgelegt ist.

5. Verfahren zur Reduktion des Übersprechens nach Anspruch 4, weiterhin umfassend einen Schritt des Vorcodierens zumindest des besagten zweiten Signalstroms auf der Basis von von der besagten Schätzung abgeleiteten Informationen, und des Übertragens des besagten vorcodierten zweiten Signalstroms auf dem besagten Opferkanal.

6. Verfahren zur Reduktion des Übersprechens nach Anspruch 5, wobei, wenn das besagte Störsignal zur Reduktion des besagten Übersprechens beiträgt, das besagte Störsignal für das Anpassen des besagten Vorcodierungsvorgangs verwendet wird.

7. Verfahren zur Reduktion des Übersprechens nach Anspruch 5, wobei, wenn das besagte Störsignal nicht zur Reduktion des besagten Übersprechens beiträgt, zumindest eine zusätzliche Signal-zu-Interferenz-plus-Rausch-Messung durchgeführt wird.

8. Verfahren zur Reduktion des Übersprechens nach einem beliebigen der Ansprüche 1 bis 7, wobei das besagte Störsignal eine im Wesentlichen der Phase der besagten Schätzung entgegengesetzte Phase aufweist.

9. Verfahren zur Reduktion des Übersprechens nach einem beliebigen der vorstehenden Ansprüche, wobei die Schritte des Verfahrens wiederholt durchgeführt werden.

10. Verfahren zur Reduktion des Übersprechens nach einem beliebigen der vorstehenden Ansprüche, wobei das Übersprechen von einer Mehrzahl von Störkanälen verursacht wird, und wobei eine Schätzung des von einem jeden der Störkanäle verursachten Übersprechens erhalten wird.

11. Vorrichtung zur Verwendung in einem Verfahren nach einem beliebigen der Ansprüche 1 bis 10, umfassend Mittel zum Empfangen einer Schätzung des von einem Störkanal auf einem Opferkanal in einem Mehrkanal-Kommunikationssystem verursachten Übersprechens, Mittel zum Empfangen eines auf dem besagten Opferkanal festgestellten Signal-zu-Interferenz-plus-Rausch-Verhältnisses, und einen Sender, welcher für die Übertragung eines Störsignals auf der Basis der Phase der besagten Schätzung des besagten Übersprechens, einer korrekt ausgewählten Phase θ und des besagten Signal-zu-Interferenz-plus-Rausch-Verhältnisses ausgelegt ist.

12. Vorrichtung nach Anspruch 11, weiterhin umfassend Mittel zum Speichern der besagten empfangenen Übersprechschätzungen.

**13.** Vorrichtung nach Anspruch 11 oder 12, weiterhin umfassend Mittel zum Vorcodieren.

**Revendications**

**1.** Procédé pour réduire la diaphonie due à un canal perturbateur sur un canal cible dans un système de communication multicanal, ledit procédé comprenant les étapes suivantes

> - recevoir dans un premier temps un premier rapport signal sur interférence plus bruit observé sur ledit canal cible,
> - obtenir une estimation de ladite diaphonie due audit canal perturbateur sur ledit canal cible,
> - transmettre à partir d'au moins un émetteur vers un récepteur dudit système de communication, ledit récepteur étant disposé pour recevoir des données envoyées par l'intermédiaire dudit canal cible, un signal de perturbation et
> - obtenir dans un deuxième temps un deuxième rapport signal sur interférence plus bruit observé sur ledit canal cible,
>
> **caractérisé en ce que** ledit signal de perturbation est basé sur la phase de ladite estimation de ladite diaphonie, sur une phase θ sélectionnée de manière appropriée et sur ledit premier rapport signal sur interférence plus bruit.

**2.** Procédé pour réduire la diaphonie selon la revendication 1, dans lequel ledit signal de perturbation est transmis par l'intermédiaire dudit canal cible.

**3.** Procédé pour réduire la diaphonie selon la revendication 1 ou 2, dans lequel une étape, destinée à évaluer si ledit signal de perturbation transmis contribue à la réduction de ladite diaphonie, est exécutée.

**4.** Procédé pour réduire la diaphonie selon la revendication 1, 2 ou 3, dans lequel ladite estimation de ladite diaphonie est obtenue en déterminant au niveau dudit récepteur dudit système de communication un rapport signal sur interférence plus bruit sur ledit canal cible, tout en transmettant un premier flux de signaux sur ledit canal perturbateur et un deuxième flux de signaux sur ledit canal cible, ledit récepteur étant configuré au moins pour recevoir ledit deuxième flux de signaux.

**5.** Procédé pour réduire la diaphonie selon la revendication 4, comprenant en outre une étape de précodage d'au moins ledit deuxième flux de signaux en se basant sur des informations dérivées de ladite estimation et de transmission dudit deuxième flux de signaux précodé sur ledit canal cible.

**6.** Procédé pour réduire la diaphonie selon la revendication 5, dans lequel, si ledit signal de perturbation contribue bien à la réduction de ladite diaphonie, ledit signal de perturbation est utilisé pour adapter ladite opération de précodage.

**7.** Procédé pour réduire la diaphonie selon la revendication 5, dans lequel, si ledit signal de perturbation ne contribue pas à la réduction de ladite diaphonie, au moins une mesure de signal sur interférence plus bruit supplémentaire est réalisée.

**8.** Procédé pour réduire la diaphonie selon l'une quelconque des revendications 1 à 7, dans lequel ledit signal de perturbation présente une phase sensiblement opposée à la phase de ladite estimation.

**9.** Procédé pour réduire la diaphonie selon l'une quelconque des revendications précédentes, dans lequel les étapes du procédé sont exécutées de manière itérative.

**10.** Procédé pour réduire la diaphonie selon l'une quelconque des revendications précédentes, dans lequel la diaphonie est due à une pluralité de canaux perturbateurs et dans lequel on obtient une estimation de la diaphonie due à chacun des canaux perturbateurs.

**11.** Dispositif à utiliser dans un procédé selon l'une quelconque des revendications 1 à 10, comprenant des moyens pour recevoir une estimation de la diaphonie due à un canal perturbateur sur un canal cible dans un système de communication multicanal, des moyens pour recevoir un rapport signal sur interférence plus bruit observé sur ledit canal cible, et un émetteur disposé pour transmettre un signal de perturbation basé sur la phase de ladite estimation de ladite diaphonie, sur une phase θ sélectionnée de manière appropriée et sur ledit rapport signal sur interférence plus bruit.

**12.** Dispositif selon la revendication 11, comprenant en outre des moyens pour stocker lesdites estimations de diaphonie reçues.

**13.** Dispositif selon la revendication 11 ou 12, comprenant en outre des moyens de précodage.

FIG. 1

FIG. 2

FIG. 3

*FIG. 4*

*FIG. 5*

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008123977 A
- US 11897809 B

- WO 2009032093 A